# EUROPEAN PATENT APPLICATION

(11) **EP 4 763 489 A1**
(43) Date of publication of application: **24.06.2026**
(21) Application number: 24307172.7
(22) Date of filing: 18.12.2024
(51) Int. Cl.: B29D 11/00

(54) **METHOD FOR MANUFACTURING A TINTED OPHTHALMIC DEVICE AND MANUFACTURING SYSTEM CONFIGURED TO CARRY OUT SUCH A METHOD**

(71) Applicant: Essilor International, 94220 Charenton-Le-Pont (FR)
(72) Inventor: YESILKAYA, Bahhar, 94000 Créteil (FR); POUSSE, Charlène, 94220 Charenton-Le-Pont (FR)
(74) Representative: Santarelli

(57) **Abstract**

The disclosure provides a method for manufacturing a tinted ophthalmic device (5) having at least one curved face (14) thanks to at least one inkjet print head (6), the method comprising providing a manufacturing file comprising at least one image; wherein the at least one image is defined by a network of pixels representative of a distribution of tint material for inkjet printing a tint layer (17) on the at least one curved face of the ophthalmic device, and the at least one image is planar and determined as a function of at least curvature geometrical characteristics of the at least one curved face of the tinted ophthalmic device to manufacture.

## Description

### FIELD OF THE DISCLOSURE

The disclosure relates to a method for manufacturing an ophthalmic device. More specifically, the disclosure relates to a method for manufacturing tinted ophthalmic device by inkjet printing.

The disclosure also relates to a system configured to carry out such a method.

The disclosure also relates to a command and control unit including system elements configured to run a computer program in order to implement steps of the manufacturing method, and to a manufacturing system comprising such a command and control unit and configured for carrying out steps of such a method.

The disclosure also relates to a computer program including instructions configured to implement such a manufacturing method, when said computer program is run by a computer, and to a client-server communication interface for transferring to a remote computer at least manufacturing data which are determined by a computer program that implements steps of the manufacturing method, when said computer program is run in a command and control unit, the remote computer implementing the other steps of such method.

### BACKGROUND ART

Known methods for tinting ophthalmic devices, such as spectacle lenses, are for example dip-tinting method and sublimation method.

Dip-tinting method comprises dying an ophthalmic device by dipping the ophthalmic device into a tinting bath, thereby tinting the ophthalmic device.

Sublimation method comprises thermally transferring colored dyes from a printed paper onto the ophthalmic device by successive steps of sublimation and imbibition. Dye transitions from the paper to a gaseous state and penetrates the ophthalmic device, which absorbs the dye, resulting in the desired tinting effect.

International application WO2024/023177 provides a method for tinting optical articles, such as lenses, via a sublimation technique. A sublimable ink is first printed onto a printed support, and this ink is then thermally transferred to an optical article using a sublimation process. The method involves controlling the level of at least one ink, through an experimentally determined variation law of an optical property as a function of the inking level of the at least one ink, to obtain a predetermined optical property, such as light absorption or transmission, in the optical article obtained.

### SUMMARY OF THE DISCLOSURE

The disclosure is directed to a method for manufacturing a tinted ophthalmic device, for instance by inkjet-printing a tint layer, which is simple and convenient to carry out.

The disclosure accordingly provides a method for manufacturing a tinted ophthalmic device having at least one curved face thanks to at least one inkjet print head, the method comprising providing a manufacturing file comprising at least one image.

The at least one image is defined by a network of pixels representative of a distribution of tint material for inkjet printing a tint layer on the at least one curved face of the ophthalmic device, and the at least one image is planar and determined as a function of at least curvature geometrical characteristics of the at least one curved face of the tinted ophthalmic device to manufacture.

In the method according to the disclosure, the at least one image used for the inkjet printing of the tint layer thus takes into account the fact that the network of pixels is deposited on a curved face. This is because the deposition of tint material can be non-uniform compared to a deposition on a planar surface.

In addition, in the method according to the disclosure, the at least one image used for the inkjet printing of the tint layer further takes into account the fact that the network of pixels is defined on a planar representation while the deposited tint layer is curved, because the planar representation has a smallest area than the area of the curved face and the area of the deposited curved tint layer as such.

In other words, the at least one image is planar and determined as a function of at least curvature geometrical characteristics of the curved face on which is deposited the tint layer, so as to achieve for instance an accurate, and optionally uniform, deposition of the droplets of tint material to at least partially form the tint layer on the curved face.

It is to be noted that the curved face may be concave or convex.

Thanks to the method according to the disclosure, it is possible thus to control accurately the inkjet printing of the tint layer on the ophthalmic device to depose on the curved face.

Such an accurate control may allow to obtain a tinted ophthalmic device with determined transmission properties.

Indeed, when deposited on the curved face, the tint layer is then imbibing into a core of the ophthalmic device so as to provide the tinted ophthalmic device with transmission properties at least partially defined by a light absorbed on a predetermined wavelength range depending on the tint material.

In other words, the tint material is configured to absorb light on the predetermined wavelength range, and the wavelength range may belong in the visible range.

The determined transmission properties of the tinted ophthalmic device to be manufactured can thus be defined as an amount of light that can pass through the tinted ophthalmic device, in said wavelength range.

The method according to the disclosure may thus allow to accurately control the deposition of the droplets of tint material so as to obtain a tinted ophthalmic device having for instance a homogeneous transmission properties.

Advantageous and convenient features of the manufacturing method are described below.

It is to be noted that the curved face of the tinted ophthalmic device to manufacture forms a curved depositing surface onto which are deposited the droplets of tint material and the at least one image is planar and determined also as a function of location parameters of the at least one inkjet print head relative to the curved depositing surface.

The method may comprise a step of generating the manufacturing file.

The tint layer can be deposited in a single layer or can comprise several tint sublayers.

It is to be noted that the manufacturing file may include geometrical characteristics of slices which are representative of the tint sublayers to be printed.

A slice may comprise one or several images, each representative of the pixels distribution to be ejected by the at least one nozzle.

The geometrical characteristics of the curved face may comprise local slopes at determined locations of the curved face where droplets of tint material are to be deposited, as defined in the at least one planar image.

The network of pixels can be defined by a number of pixels determined in relation to the local slopes of the curved face.

The number of pixels may vary in the at least one image.

The number of pixels may increase where the local slope increases.

The network of pixels of the at least one image may be further determined so as to obtain a tinted ophthalmic device having determined transmission properties.

The determined transmission properties can be substantially homogenous in whole tinted ophthalmic device.

The determined transmission properties may vary from less than 10 %, preferably less than 5 %, preferably less than 2%, in the whole tinted ophthalmic device.

The method may further comprise printing the tint layer on the at least one curved face according to the at least one image, and processing for imbibition of the tint material into the tinted ophthalmic device to manufacture.

Processing for imbibition of the tint material may comprise waiting for a predetermined time and curing the ophthalmic device imbibed with the tint material so as to obtain the tinted ophthalmic device.

Said predetermined time may be equal or different to zero.

The method may further comprise generating and/or providing a database including, for predetermined curved faces made of predetermined materials and for predetermined tint materials, and optionally for predetermined location parameters of the at least one inkjet print head relative to the curved depositing surface, associated networks of pixels representative of a deposition of the tint material to at least partially form the tint layer on the curved face of the tinted ophthalmic device to manufacture.

The manufacturing file may comprise further parameters including imbibition characteristics.

As explained above, the tint layer may comprise several tint sublayers.

The tint sublayers may be at least partially juxtaposed and/or at least partially superimposed.

The tint sublayers may be inkjet printed at least partially simultaneously and/or at least partially successively.

The step of inkjet printing the tint layer may be performed with print properties which can be fixed or variable during inkjet printing.

The print properties may comprise a tint material and/or a drop density and/or a drop volume and/or a drop viscosity and/or a drop speed ejection.

The print properties may also comprise a print head resolution corresponding to a radial resolution of the print head which is defined at least as a function of the number and the arrangement of the nozzles.

The manufacturing file may comprise parameters further including positioning data of the ophthalmic device and/or of the at least one inkjet print head, which are determined depending on the at least one nozzle and/or on the curvature geometrical characteristics of the at least one curved face.

The method may comprise a step of positioning the ophthalmic device and/or the at least one inkjet print head based on the manufacturing file.

The disclosure also provides, according to a second aspect, a command and control unit including system elements configured to run a computer program in order to manufacture a tinted ophthalmic device having at least a curved face, thanks to at least one inkjet print head having at least one nozzle, by providing at least one image being defined by a network of pixels representative of a distribution of tint material for inkjet printing a tint layer on the at least one curved face of the ophthalmic device and being used for activating and deactivating the at least one nozzle of the at least one inkjet print head; wherein the at least one image is planar and determined as a function of at least curvature geometrical characteristics of the curved face of the tinted ophthalmic device to manufacture.

The disclosure also provides, according to a third aspect, a manufacturing system comprising an inkjet printer comprising at least one inkjet print head having at least one nozzle and a command and control unit, the system being configured for manufacturing a tinted ophthalmic device having at least a curved face, by providing at least one image, the at least one image being defined by a network of pixels representative of a distribution of tint material for inkjet printing a tint layer on the at least one curved face of the ophthalmic device and being used for activating and deactivating the at least one nozzle of the at least one inkjet print head; wherein the at least one image is planar and determined as a function of at least curvature geometrical characteristics of the curved face of the tinted ophthalmic device to manufacture.

The disclosure also provides, according to a fourth aspect, a computer program including instructions configured to cause a manufacturing system and/or a command and control unit to manufacture a tinted ophthalmic device having at least a curved face, thanks to at least one inkjet print head having at least one nozzle, by determining a manufacturing file comprising at least one image being defined by a network of pixels representative of a distribution of droplets of tint material for inkjet printing at least partially a tint layer on the curved face of the ophthalmic device and being used for activating and deactivating the at least one nozzle of the at least one inkjet print head; wherein the at least one image is planar and determined as a function of at least curvature geometrical characteristics of the curved face of the tinted ophthalmic device to manufacture, when said computer program is run by a computer.

The disclosure also provides, according to a fifth aspect, a client-server communication interface for transferring to a remote computer at least one image for manufacturing a tinted ophthalmic device having at least a curved face, the at least one image being determined by a computer program when said computer program is run in a command and control unit of the client-server communication interface and comprising parameters including at least one image, the at least one image being defined by a network of pixels representative of a distribution of tint material for inkjet printing a tint layer on the at least one curved face of the ophthalmic device; wherein the at least one image is planar and determined as a function of at least curvature geometrical characteristics of the curved face of the tinted ophthalmic device to manufacture, the remote computer being configured to cause a manufacturing system to implement inkjet printing the tint layer of the tinted ophthalmic device.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for manufacturing tinted ophthalmic devices.
Figure 2 diagrammatically shows a client-server communication interface comprising system parts configured for transferring at least one manufacturing file determined by the method according to the disclosure to a remote data processing system.
Figure 3 shows another view of the manufacturing system illustrated in Figure 1.
Figure 4 is a schematic view showing some steps for printing a tint layer on a curved face of a tinted ophthalmic device thanks to an inkjet printer of the manufacturing system.
Figure 5 is a block diagram showing steps of the method for manufacturing a tinted ophthalmic device according to the disclosure.
Figures 6 and 7 schematically show tinted ophthalmic devices having different pixels distribution and associated profiles of transmission properties.

### DETAILED DESCRIPTION OF EXAMPLE EMBODIMENTS

The disclosure is directed to a method and a manufacturing system for manufacturing a tinted ophthalmic device by inkjet printing a tint layer on at least one curved face of the ophthalmic device.

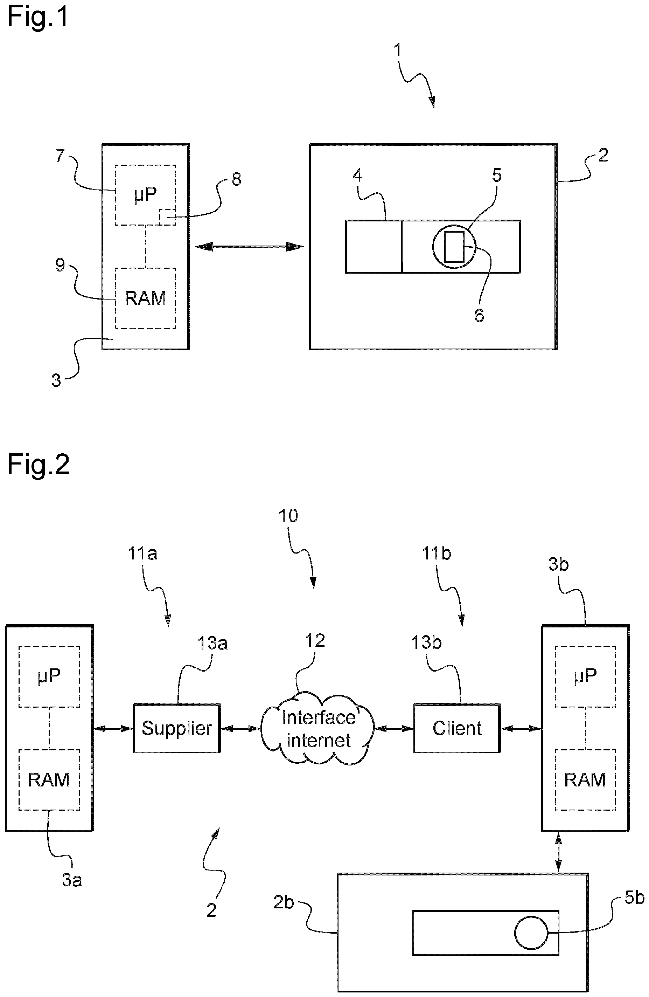

Figure 1 illustrates schematically a manufacturing system 1 configured to carry out a method for manufacturing tinted ophthalmic devices 5, such as for instance tinted spectacle lenses.

The tinted ophthalmic device 5 has a body which has for instance a predetermined optical function and which is made from at least one predetermined material.

The body of the tinted ophthalmic device 5, also called blank substrate or semi-finished substrate or finished substrate, can be made by molding and/or machining, or by additive manufacturing. In this respect, the substrate can be additively manufactured as a whole or according to a build-over technology, that is to say only a part of the tinted ophthalmic device is additively manufactured onto a starting optical element previously molded and/or machined.

In the present disclosure, the tint of the ophthalmic device 5 is processed by additive manufacturing.

In this respect, the manufacturing system 1 comprises a tinting unit also called tinting module, which is here formed by an inkjet printer 2 configured for projecting volumes of a tint material in the shape of droplets.

The tint material is suitable for manufacturing tinted ophthalmic devices 5, that is to say that the tint material is able to imbibe into the body of the ophthalmic device so as to define determined transmission properties.

The manufacturing system 1 further comprises system parts generally formed by at least one command and control unit 3 configured to communicate with a data processing system (or control unit) of the inkjet printer 2 and configured to run a computer program having instructions configured to implement at least some steps of the method, when said computer program is run by a computer.

The inkjet printer 2 comprises one or a plurality of inkjet print heads 6 configured to project the tint material, for instance as droplets or in jets of droplets.

In the embodiment shown in Figure 1, the inkjet printer 2 further comprises at least one imbibition device 4 including for instance an irradiation source configured for imbibing into the tinted ophthalmic device 5 the droplets of tint material previously projected.

In an alternative embodiment, the at least one imbibition device can be separate from the inkjet printer.

The inkjet print heads 6 may comprise a plurality of nozzles located in a determined arrangement, for instance along a predetermined length and a predetermined width, so that to define one or a plurality of groups of adjacent nozzles.

The inkjet printer 2 may comprise a data processing system or a control unit (not shown) configured for controlling at least the inkjet print heads 6 and the imbibition device 4.

The command and control unit 3 comprises a microprocessor 7 having a memory 8, in particular a non-volatile memory, allowing it to load and store the computer program, also called software, which when it is executed in the microprocessor 7, allows the implementation of the method according to the disclosure and thus the use of the inkjet printer 2.

This non-volatile memory 8 is for example of the ROM ("read only memory") type.

The command and control unit 3 further comprises a memory 9, in particular a volatile memory, allowing data to be stored during the execution of the software and the implementation of the method.

This volatile memory 9 is for example of the RAM or EEPROM type (respectively "random access memory" and "electrically erasable programmable read only memory").

The command and control unit 3 may be only at least partially integrated into the inkjet printer 2. In other words, the command and control unit 3 may be arranged in part, or in whole, outside the inkjet printer 2. In particular, the command and control unit 3 may comprise one or a plurality of command and control modules located inside and/or outside the inkjet printer 2.

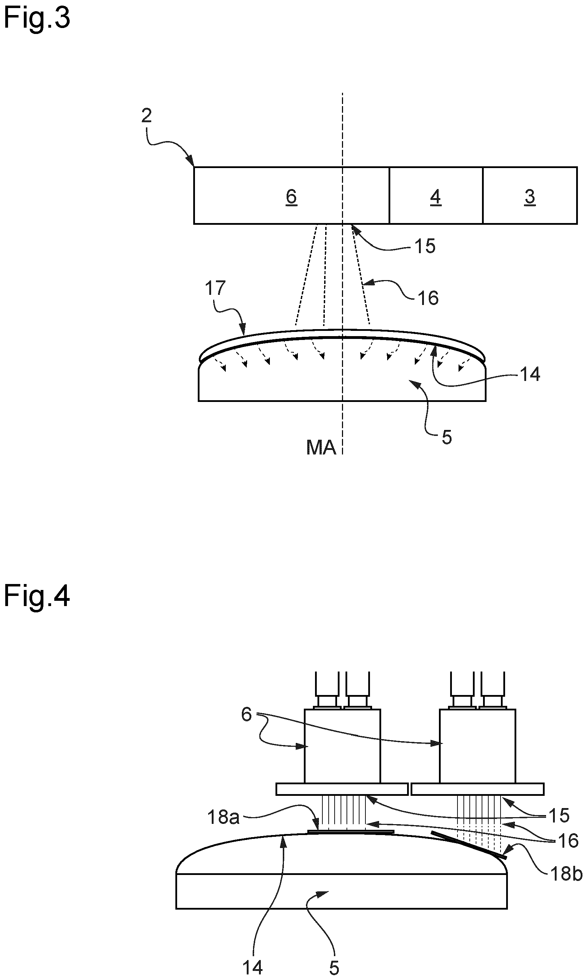

The inkjet printer 2 is here configured at least for the inkjet printing of the tinted ophthalmic device 5, by inkjet printing a tint layer (see below in detail in reference to Figure 3) which is formed by a volume of the tint material, on a curved face of the ophthalmic device 5, and for imbibing the volumes of tint material in the body of the ophthalmic device in order to form the tinted ophthalmic device 5.

It is to be noted that the tint layer can comprise several tint sublayers which are deposited on a curved depositing surface, either formed by the curved face of the substrate or by a previous deposited sublayer (not imbibed yet).

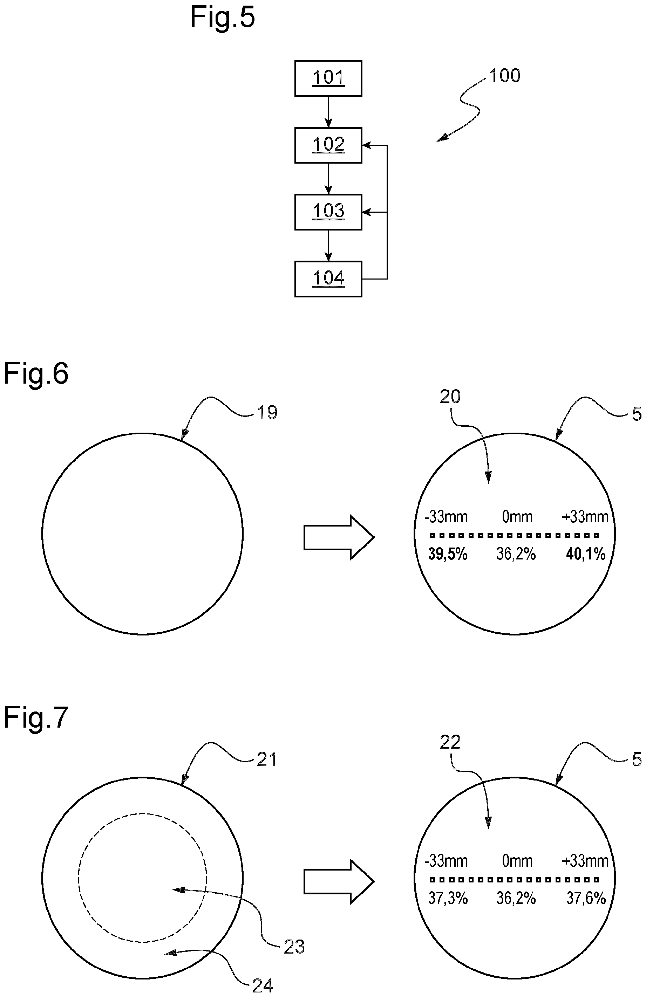

In this respect, the command and control unit 3 is also configured to command and control at least some of steps of a manufacturing method described below at least in reference to Figure 6.

Figure 2 shows a client-server communication interface 10 comprising for instance a so-called supplier-side 11a and another, so-called client-side 11b, and these two sides communicating via for instance an internet interface 12.

The supplier-side 11a comprises a supplier server 13a linked to a data processing system or a command and control unit 3a of the same type as that in Figure 1, this server 13a being configured to communicate with the internet interface 12.

The client-side 11b also comprises a client server 13b which is configured to communicate with the internet interface 12, and which is linked to a data processing system or a command and control unit 3b of the same type as that of the supplier-side.

In addition, the command and control unit 3b on the client-side 11b is linked to an inkjet printer 2b of the same type as that in Figure 1, and is configured to manufacture at least a tint layer of the tinted ophthalmic device on a curved depositing surface.

For instance, the command and control unit 3b on the client-side 11b is configured for receiving some parameters about the tinted ophthalmic device 5 to be manufactured, including for instance curvature geometrical characteristics of the at least one curved face forming the curved depositing surface of the and/or the location parameters of the inkjet print head(s) 6 relative to the curved depositing surface.

For instance, the geometrical characteristics of the curved face comprise local slopes parameters at determined locations of the curved depositing surface where droplets of tint material are to be deposited, as defined in the at least one planar image.

Local slope parameters may comprise for instance local slope value and/or local slope direction from a center of the curved face at determined locations of the curved supporting surface, and/or orientation of the local slope with regard to an expected trajectory of the droplets of tint material ejected by the inkjet print head.

In addition, the location parameters of the inkjet print head(s) 6 relative to the curved depositing surface may include for instance the trajectory of the print head relative to the curved supporting surface (or plan of print head if the trajectory is planar), distances between nozzle and determined locations of the curved face where droplets of tint material are to be deposited, and contact angle of the droplets of tint material at said determined locations

The command and control unit 3b on the client-side 11b may be configured for receiving also some parameters about the inkjet print heads include information representative of the status of each print head, such as a number of nozzles and/or a geometrical arrangement of the nozzles.

The command and control unit 3b on the client-side 11b, using the internet interface 12 and both client server 13b and supplier server 13a, sends at least some data received by the command and control unit 3b on the client-side 11b, to the command and control unit 3a on the supplier-side 11a for the determination of a manufacturing file representative of operational parameters, including images defined by networks of pixels representative of the distribution of droplets of tint material for inkjet printing the tint layer on the curved face of the ophthalmic device 5; the network of pixels being determined by taking into account the fact that the image is a planar representation having a smallest area than the area of the curved face and the area of the tint layer as such, and also the fact that the deposition of tint material can be non-uniform compared to a deposition on a planar face, and optionally also the location parameters of the inkjet print head(s) 6 relative to the curved depositing surface; so as to obtain the tinted ophthalmic device 5 having determined transmission properties.

The command and control unit 3a on the supplier-side 11a executes the computer program that it contains in order to determine the manufacturing file.

Using the supplier server 13a and the internet interface 12, the command and control unit 3a on the supplier-side 11a may send the manufacturing file to the command and control unit 3b on the client-side 11b.

The command and control unit 3b on the client-side 11b is here configured to execute software for implementing the other steps of the manufacturing method for manufacturing by inkjet printing the tinted ophthalmic device 5 thanks to the inkjet printer 2b.

In an alternative embodiment, a step of determining the manufacturing file can be carried out by the command and control unit 3b on the client-side 11b.

In another alternative embodiment, the inkjet printer 2b can be located on the supplier-side 11a so that the command and control unit 3a on the supplier-side 11a is further configured to inkjet print the tint layer on the tinted ophthalmic device 5.

Figure 3 illustrates schematically the inkjet printer 2 which carries out the method for manufacturing the tinted ophthalmic device 5, particularly inkjet printing the tint layer 17 on the at least one curved face 14 of the tinted ophthalmic device 5.

To be noted that the curved face 14 here forms the curved depositing surface on which are deposited the droplets of tint material.

The inkjet print heads 6 of the inkjet printer 2 have each a plurality of nozzles 15 from which the tint material is projected in jets of droplets 16, or stream, to form the tint layer 17 of the tinted ophthalmic device 5.

The tint layer 17 is deposited on the curved face 14 of the ophthalmic device 5.

The inkjet printer 2 is here located on an upper side of the tinted ophthalmic device 5 to manufacture and is configured to inkjet print the tint layer 17 on the curved face 14 of the tinted ophthalmic device 5.

The curved face 14 is thus here the front face of the ophthalmic device 5.

In another embodiment, the curved face 14 may be the back face of the ophthalmic device 5, the back face being opposed to the front face.

As explained above, the tint layer 17 may comprise several tint sublayers.

A first one of tint sublayers is printed on the curved face 14 of the ophthalmic device 5, and subsequent tint sublayers are printed over the already deposited tint sublayers.

The command and control unit 3 may be configured to locate the inkjet print heads 6 at least at a distance value selected among a plurality of distance values from the ophthalmic device 5.

The distance value is comprised between a minimum height according to which the tint material is able to form droplets and a maximum height according to which the droplets of tint material are deposited accurately on the curved face 14.

Each print head 6 has a predetermined number of nozzle(s) 15 and a predetermined arrangement thereof. The nozzles 15 can be activated or deactivated.

For instance, each inkjet print head 6 may comprise nozzles 15 arranged in juxtaposed rows thus defining a predetermined length and a predetermined width.

The command and control unit 3 may also be configured to command and control the inkjet print heads 6 and in particular, a print head resolution corresponding to a radial resolution of the inkjet print heads 6 which is defined at least as a function of the number and the arrangement of the nozzles 15.

The command and control unit 3 may be configured to command and control activation and/or deactivation of each nozzle 15 and also each nozzle firing frequency if any.

The nozzle firing frequency can be variable or fixed.

The nozzle firing frequency may depend at least on geometrical characteristics of the tinted ophthalmic device 5 to be manufactured and/or on the location parameters, including for instance tilting and radial shifting relative to a manufacturing axis MA, of the inkjet print heads 6.

In one embodiment, the ophthalmic device 5, thus the curved face 14, can be able to rotate around a rotation axis corresponding to the manufacturing axis MA and/or the inkjet print heads 6 and the curved face 14 can be able to be inclined one relative to each other and/or the inkjet print heads 6 can be able to be inclined relative to the manufacturing axis MA.

In this respect, the command and control unit 3 may also be configured to command and control a tilt angle of the inkjet print heads 6 and the support member 18 one relative to each other, and a rotation speed of the support member 18 around the manufacturing axis MA, if any.

In addition, the command and control unit 3 may be configured to command and control a print resolution of the inkjet print heads 6, which comprises a process resolution corresponding to an angular resolution which is defined at least as a function of nozzles firing frequency, and the print head resolution as defined above.

Furthermore, the command and control unit 3 may be configured to command and control the imbibition device 4 so as to process imbibition of the tint layer 17 formed as a single layer or as several sublayers in the body of the ophthalmic device 5.

It is to be noted that the imbibition device 4 is formed by a heat source, such as an oven, a laser or similar device.

Figure 4 illustrates schematically the inkjet printer 2 carrying out some steps for printing the tint layer 17 on the curved face 14 thanks to the inkjet printer 2 of the manufacturing system 1.

The inkjet print heads 6 are configured to perform inkjet printing of the tint layer 17 thanks to parameters from the manufacturing file, and in particular the plurality of images each representative of the determined networks of pixels.

In one embodiment, the geometrical characteristics of the curved face 14 may comprise local slopes 18a, 18b at determined locations of the curved face 14 where droplets of tint material are to be deposited, as defined in the at least one planar image.

The local slopes 18a,18b are for instance representative of the curvature of the curved face 14, in value and/or in direction.

For instance, a local slope 18a in the center of the curved face 14 is lower than a local slope 18b on an edge of the curved face 14.

The plurality of image is determined as a function of at least the local slopes 18a, 18b of the curved face 17 of the tinted ophthalmic device 5.

The number of pixels in the network of pixels increase where the local slopes 18a, 18b increase.

For instance, the number of pixels in the center of the image representative of the network of pixels is lower than on the edge of said image.

The plurality of image may also be determined as a function of the location parameters of the inkjet print heads 6 relative to the curved depositing surface formed here by the curved face 14, of course in relation to the local slopes.

In an alternative embodiment, the local slope in the center of the curved face may be higher than the local slope on the edge of the curved face.

The network of pixels of the image may further be determined so as to obtain a tinted ophthalmic device 5 having determined transmission properties, and in particular a homogeneous transmission properties in the tinted ophthalmic device 5.

As stated above, the relative position of the inkjet print heads 6 and tinted ophthalmic device 5 can be controlled, like the print resolution of the inkjet print heads 6, which comprises a process resolution corresponding to a spatial resolution which is defined at least as a function of nozzles firing frequency, and the print head resolution as defined above.

Figure 5 illustrates schematically a block diagram showing the main steps of the method 100 for manufacturing the tinted ophthalmic device 5, the method 100 being carried out thanks to the manufacturing system 1 as described above.

The method 100 comprises a step of generating and/or providing 101 the manufacturing file comprising at least one image.

The at least one image is planar and defined by the network of pixels representative of the distribution of tint material for inkjet printing the tint layer 17 on the curved face 14 of the ophthalmic device 5.

The manufacturing file may comprise parameters including positioning data of the ophthalmic device 5 and/or of the inkjet print heads 6, which are determined depending on the selected nozzles 15; and parameters including imbibition characteristics.

It is to be noted that the manufacturing file may comprise several subfiles including one or several of the above-mentioned parameters and data.

The method 100 may further comprises a step of positioning 102 the tinted ophthalmic device 5 and/or the inkjet print heads 6, one relative to the other and also in relation to the manufacturing axis MA, based on dedicated location parameters in the generated and/or provided manufacturing file.

The method 100 further comprises a step of inkjet printing 103 the tint layer 17 on the curved face 14 of the ophthalmic device 5, based on dedicated parameters in the generated and/or provided manufacturing file, and in particular in accordance with the network of pixels representative of the distribution of tint material.

In one embodiment, the step 103 of inkjet printing the tint layer 17 may comprise substeps of inkjet printing, performed at least partially simultaneously and/or at least partially successively, for instance to print tint sublayers at least partially juxtaposed and/or at least partially superimposed.

In this embodiment, the substeps of step 103 of inkjet printing the tint sublayers may be performed with print properties, similar to each other, or different.

The print properties can be fixed or variable during inkjet printing.

The method 100 further comprises a step of imbibition 104, when the tint layer 17 is at least partially deposited in the ophthalmic device 5, based on dedicated parameters in the generated and/or provided manufacturing file.

It is to be noted that the step of imbibition 104 can be carried out when the whole of tint layer 17 is deposited or when at least some of tint sublayers is deposited.

It is to be noted also that the step of imbibition 104 can comprise waiting for a predetermined time and curing the ophthalmic device imbibed with the tint material so as to obtain the tinted ophthalmic device 5.

The waiting step can be omitted.

At least some steps of the method 100 can be performed iteratively. For instance, the position of the tinted ophthalmic device 5 and/or of the inkjet print heads 6 can change, and/or as stated above, the imbibition can be performed after each tint sublayer is printed or after several sublayers, etc.

Figure 6 shows on the left a first image having a first pixels distribution 19 for manufacturing the tinted ophthalmic device 5 visible on the right of Figure 6, wherein the tinted ophthalmic device 5 has a first determined transmission properties 20.

In particular, in Figure 6, the first pixels distribution 19 is homogeneous so that a similar number of pixels is applied on the whole image, and the first determined transmission properties 20 thus varies from the center to the edge of the tinted ophthalmic device 5, for instance from around 36 % on the center to around 39 % and 40 % on the opposite edges.

Figure 7 is a similar view and shows on the left a second image having a second pixels distribution 21 for manufacturing the tinted ophthalmic device 5 visible on the right of Figure 7, wherein the tinted ophthalmic device 5 has a second determined transmission properties 22.

In particular, in Figure 7, the second pixels distribution 19 is not homogeneous so that different numbers of pixels are applied in zones 23 and 24 of the image, and the second determined transmission properties 22 is more homogeneous than the first determined transmission properties 20 in Figure 6. Here, the second determined transmission properties 22 varies only for instance from around 36 % on the center to around 37 % on the opposite edges.

For instance, in Figure 7, the density of pixels is progressively increasing on the perimeter of the image, that is to say from the center illustrated by the zone 23 to the edge illustrated by the zone 24.

Said otherwise, the first image on Figure 6 does not take into account the fact that the first network of pixels 19 is deposited on a curved face, while the second image on Figure 7 takes into account the fact that the second network of pixels 21 is deposited on a curved face, in accordance to the method disclosed in reference to Figure 6.

In particular, in the embodiment shown in Figure 7, the zone 23 is associated with lower local slopes in the center of the curved face, and the zone 24 in the image is associated with higher local slopes on the edge of the curved face.

By implementing the method 100 according to the disclosure to this image, the manufactured tinted ophthalmic device 22 shows improved transmission homogeneity.

More generally, the method according to the disclosure allows to obtain determined transmission properties varying from less than 10 %, preferably less than 5 %, preferably less than 2%, in the whole tinted ophthalmic device 5.

In the method according to the disclosure, the at least one image used for the inkjet printing of the tint layer 17 thus takes into account the fact that the network of pixels is deposited on a curved face 14.

In addition, in the method according to the disclosure, the at least one image used for the inkjet printing of the tint layer 17 further takes into account the fact that the network of pixels is defined on a planar representation while the deposited tint layer 17 is curved, because the planar representation has a smallest area than the area of the curved face 14 and the area of the deposited curved tint layer 17 as such.

In other words, the at least one image is planar and determined as a function of at least curvature geometrical characteristics of the curved face 14 on which is deposited the tint layer 17, so as to achieve for instance an accurate, and optionally uniform, deposition of tint material to at least partially form the tint layer 17 on the curved face 14.

Thanks to the method according to the disclosure, it is thus possible to control accurately the inkjet printing of the tint layer 17 on the ophthalmic device 5 to depose on the curved face 14.

Such an accurate control may allow to obtain a tinted ophthalmic device 5 with determined transmission properties.

The method according to the disclosure may thus allow to accurately control the deposition of the droplets of tint material so as to obtain a tinted ophthalmic device 5 having for instance a homogeneous transmission properties.

It should be noted more generally that the disclosure is not limited to the examples described and represented.

## Claims

1. Method for manufacturing a tinted ophthalmic (5) device having at least one curved face (14) at least thanks to at least one inkjet print head (6), the method comprising providing (101) a manufacturing file comprising at least one image; wherein the at least one image is defined by a network of pixels (21) representative of a distribution of tint material for inkjet printing a tint layer (17) on the at least one curved face of the ophthalmic device (5), and the at least one image is planar and determined as a function of at least curvature geometrical characteristics of the at least one curved face of the tinted ophthalmic device to manufacture.

2. Method according to claim 1, wherein the geometrical characteristics of the curved face (14) comprise local slopes (18a,b) at determined locations of the curved face where droplets of material are to be deposited, as defined in the at least one planar image.

3. Method according to claim 2, wherein the network of pixels is defined by a number of pixels determined in relation to the local slopes (14) of the curved face (18a,b).

4. Method according to claim 3, wherein the number of pixels varies in the at least one image.

5. Method according to claim 4, wherein the number of pixels increases where the local slope (14) increases.

6. Method according to any one of claims 1 to 5, wherein the network of pixels (21) of the at least one image is further determined so as to obtain a tinted ophthalmic device (5) having determined transmission properties (22).

7. Method according to claim 6, wherein the determined transmission properties (22) are substantially homogenous in whole tinted ophthalmic device (5).

8. Method according to claim 7, wherein the determined transmission properties (22) vary from less than 10 %, preferably less than 5 %, preferably less than 2 %, in the whole tinted ophthalmic device.

9. Method according to any one of claims 1 to 8, further comprising printing (103) the tint layer (17) on the at least one curved face (14) according to the at least one image, and processing for imbibition (104) of the tint material into the tinted ophthalmic device (5) to manufacture.

10. Method according to claim 9, wherein processing for imbibition (104) of the tint material (17) comprises waiting for a predetermined time and curing the ophthalmic device imbibed with the tint material so as to obtain the tinted ophthalmic device (5).

11. Method according to any one of claim 1 to 10, comprising generating and/or providing a database including, for predetermined curved faces made of predetermined materials and for predetermined tint materials, associated networks of pixels representative of a deposition of the tint material to at least partially form the tint layer (17) on the curved face of the tinted ophthalmic device (5) to manufacture.

12. A command and control unit including system elements configured to run a computer program in order to manufacture a tinted ophthalmic device (5) having at least a curved face (14), thanks to at least one inkjet print head (6) having at least one nozzle, by providing at least one image being defined by a network of pixels (22) representative of a distribution of tint material for inkjet printing a tint layer (17) on the at least one curved face of the ophthalmic device and being used for activating and deactivating the at least one nozzle of the at least one inkjet print head; wherein the at least one image is planar and determined as a function of at least curvature geometrical characteristics of the curved face of the tinted ophthalmic device to manufacture.

13. A manufacturing system comprising an inkjet printer (2) comprising at least one inkjet print head (6) having at least one nozzle and a command and control unit (3), the system (1) being configured for manufacturing a tinted ophthalmic device (5) having at least a curved face (14), by providing at least one image, the at least one image being defined by a network of pixels (22) representative of a distribution of tint material for inkjet printing a tint layer (17) on the at least one curved face of the ophthalmic device and being used for activating and deactivating the at least one nozzle of the at least one inkjet print head; wherein the at least one image is planar and determined as a function of at least curvature geometrical characteristics of the curved face of the tinted ophthalmic device to manufacture.

14. A computer program including instructions configured to cause a manufacturing system (1) and/or a command and control unit (3) to manufacture a tinted ophthalmic device (5) having at least a curved face (14), thanks to at least one inkjet print head (6) having at least one nozzle, by determining a manufacturing file comprising at least one image being defined by a network of pixels (22) representative of a distribution of droplets of tint material for inkjet printing at least partially a tint layer (17) on the curved face of the ophthalmic device and being used for activating and deactivating the at least one nozzle of the at least one inkjet print head; wherein the at least one image is planar and determined as a function of at least curvature geometrical characteristics of the curved face of the tinted ophthalmic device to manufacture, when said computer program is run by a computer.

15. A client-server communication interface for transferring to a remote computer at least one image for manufacturing a tinted ophthalmic device (5) having at least a curved face (14), the at least one image being determined by a computer program when said computer program is run in a command and control unit of the client-server communication interface (10) and comprising parameters including at least one image, the at least one image being defined by a network of pixels (22) representative of a distribution of tint material for inkjet printing a tint layer (17) on the at least one curved face of the ophthalmic device; wherein the at least one image is planar and determined as a function of at least curvature geometrical characteristics of the curved face of the tinted ophthalmic device to manufacture, the remote computer being configured to cause a manufacturing system to implement inkjet printing the tint layer of the tinted ophthalmic device.
